# FASCICULE DE BREVET EUROPEEN

(11) **EP 1 206 129 B1**
(45) Date de publication et mention de la délivrance du brevet: **02.05.2012**
(21) Numéro de dépôt: 00124715.4
(22) Date de dépôt: 13.11.2000
(51) Int. Cl.: H04N 5/222

(54) **Système de production d'images assisté par ordinateur**
Computerunterstützes Bilderzeugungssystem
Computer-aided image producing system

(43) Date de publication de la demande: 15.05.2002
(73) Titulaire: Wells & Verne Investments Ltd, St. Helier, Jersey JE4 8TR (GB)
(72) Inventeur: Osen, Karl, 1282 Dardagny (CH); Hytten, Mario, 23893 Landvetter (SE)
(74) Mandataire: Wenger, Joel-Théophile

(56) Documents cités:
- EP-A- 0 797 177
- WO-A-00/28731
- WO-A-00/56074
- US-A- 5 289 275

## Description

### DOMAINE DE L'INVENTION

La présente invention a trait à un dispositif et à un procédé pour produire, sélectionner et diffuser des images filmées à l'aide de plusieurs caméras. Un tel dispositif se révèle plus particulièrement utile dans le domaine de la production et de la diffusion d'images pour la télévision, pour le cinéma ou pour l'Internet.

### ETAT DE LA TECHNIQUE

Un système connu de production pour la retransmission d'images pour la télévision, pour le cinéma ou pour l'Internet utilise habituellement plusieurs « caméras » pour effectuer des « prises de vue » d'« objets ».

Par « caméra », on entend un dispositif équipé d'une ou plusieurs lentilles et d'un dispositif pour saisir des images.

Par « prises de vue », on entend le processus de collecter des images d'une scène. Les images peuvent être mobiles ou fixes. Les images peuvent être prises par du matériel photosensible (film) ou par de l'électronique photosensible (tube image ou divers dispositifs à semiconducteurs).

Par « objet », on entend tout ce qui peut être intéressant à prendre en vue au cours d'une émission, comme les exemples non exhaustifs suivants: un concurrent, une ligne de départ ou d'arrivée, une montre indiquant l'heure, un tableau affichant un score, un panneau publicitaire, un podium. Un et/ou plusieurs objets forment une « cible ».

Par « cible », on entend l'objet et/ou les objets duquel un « cameraman» essaie d'avoir une prise de vue.

Par « cameraman », on entend une personne opérant une caméra.

Très fréquemment l'événement devant être retransmis comporte plusieurs cibles devant être filmées par des « cameramen » et/ou l'événement se déroule sur un domaine géographiquement étendu.

Les caméras employées pour filmer de tels événements sont toutes connectées à un « studio de production » central, où est sélectionnée par le « producteur » pour la « diffusion vers l'extérieur » l'image fournie par la caméra filmant l'objet le plus approprié.

Par « producteur » on entend le coordinateur d'une émission. Ledit producteur est la personne responsable de toute la retransmission télévisée et se trouve dans ledit studio de production central. Ledit producteur est assis face à une « parois de moniteurs » reproduisant des images de tous les objets filmés et il sélectionne les meilleures images pour la « diffusion vers l'extérieur ».

Par « diffusion vers l'extérieur », on entend les images qui sont envoyées à partir du « studio de production » vers les émetteurs, c'est-à-dire que ce sont ces images que tous les téléspectateurs peuvent voir sur leur écran de télévision. La diffusion vers l'extérieur est habituellement une image provenant d'une des caméras (sélectionnée par le producteur) connectée au « studio de production ».

Par « studio de production », on entend le lieu où le producteur travaille. Le studio de production est équipé d'une « parois de moniteurs », de matériel d'enregistrement, de matériel acoustique, etc.

Par « parois de moniteurs », on entend un grand nombre de « moniteurs » placés sur une parois en face du producteur, et permettant à ce dernier d'observer les images provenant des différentes caméras connectées avec le studio de production.

Par « moniteur », on entend un écran permettant de visionner une image, habituellement une image vidéo provenant d'une caméra.

Ledit producteur est relié par communication audio avec les cameramen manoeuvrant les caméras. Ce producteur est assis en face d'une paroi formée de plusieurs moniteurs, chacun reproduisant l'image filmée par chaque caméra. En pressant des boutons, le producteur peut choisir les images qu'il veut sélectionner pour la diffusion vers l'extérieur.

Le producteur décide quelle cible doit être filmée en donnant des ordres aux différents cameramen, qui essayent de lui obéir du mieux qu'ils peuvent.

Cette méthode de production présente de nombreux problèmes. En particulier les cameramen ont une connaissance limitée de l'endroit où se trouvent les cibles à filmer et par conséquent ils ont des difficultés à réagir rapidement et précisément aux ordres provenant du producteur.

Comme les cameramen sont concentrés sur le moniteur de leur caméra, ils ne voient pas ce qui est en dehors du champ de vision de leur caméra, ce qui fait qu'ils n'ont pas une vue d'ensemble de la situation et ce qui réduit leurs possibilités de pointer leur caméra vers la partie la plus intéressante de l'action.

Actuellement beaucoup d'événements retransmis par la télévision sont financés par la publicité. Le but des compagnies faisant cette publicité étant que leur nom ou celui des leurs produits apparaissent à la télévision. Ce qui est un problème supplémentaire pour les cameramen qui ont déjà la tâche ardue de filmer une cible correctement sans devoir en plus penser à filmer la publicité. Cette situation fait que le temps d'apparition d'une publicité à la télévision est très aléatoire, ce qui n'est pas très satisfaisant pour les sponsors, surtout si l'on considère les sommes d'argent qu'ils investissent en publicité pour de tels événements.

Un autre problème de la situation actuelle est que les caméras ne peuvent filmer, à un instant donné, qu'un nombre limité d'objets, ce qui a pour effet qu'un nombre important d'événements sont mal ou pas du tout filmés. C'est particulièrement le cas pour les courses de motos, où les chutes des coureurs ne sont souvent filmées par aucune des caméras. Et même si une des caméras est en train de filmer ledit objet lorsqu'il a un accident, le cameraman a souvent des problèmes pour réagir correctement aux mouvements inattendus causés par ledit accident, c'est-à-dire à garder l'objet correctement cadré dans le champ de vision de la caméra et avec la bonne distance focale pendant tout l'accident.

Une autre difficulté que rencontre le producteur est qu'avec l'augmentation du nombre de cameras, le nombre de moniteurs placés en face de lui augmente également, ce qui rend toujours plus difficile pour le producteur de constamment sélectionner les meilleures images.

Comme le producteur effectue tous les choix des images devant être diffusées en regardant la paroi de moniteurs se trouvant devant lui, toutes les caméras doivent être connectées en permanence au studio de production. Ce qui signifie que toutes les caméras ne peuvent pas partager les mêmes câbles, un signal vidéo utilisant souvent toute la largeur de bande d'un câble de caméra, ce qui conduit à des coûts de production élevés.

Enfin, si la distance entre les caméras est grande et qu'il y a une largeur de bande passante disponible limitée lorsque les signaux vidéos sont retransmis par radio, alors le nombre de caméras qui peuvent être utilisées sera également limité. Cette limitation force souvent le producteur à utiliser moins de caméras que ce qu'il aurait voulu, réduisant ainsi la qualité de la retransmission.

### BUT DE L' INVENTION

La présente invention a pour but de résoudre les problèmes indiqués ci-dessus en aidant le producteur au moyen d'un système de production d'images assisté par ordinateur.

Selon une première forme de réalisation de l'invention, les caméras sont montées sur des capteurs de pointage.

Par « capteurs de pointage » on entend un ensemble capable de détecter grâce à des capteurs, les translations et rotations ainsi que l'angle de vue et la distance focale d'une caméra. Ces informations permettent de savoir sur quelle portion de la surface où se déplacent les cibles et avec quel angle de vue, la caméra est en train de pointer.

Le sujet principal de la présente invention est un ordinateur qui contient une ou plusieurs bases de données et qui utilise les données des capteurs de pointage afin de déterminer quelle est la prise de vue qui répond à un critère déterminé.

### DESCRIPTION

Pour qu'un ordinateur puisse assister le producteur et déterminer la meilleure prise de vue, trois éléments sont utilisés, à savoir:
- la position précise où pointe chaque caméra, la position des cibles, et des paramètres d'évaluation de l'image visée.

Les bases de données contenues par ledit ordinateur peuvent être par exemple des base de données concernant les objets, des bases de données concernant les caméras, des bases de données concernant le terrain et plus généralement toute base de données concernant tout ce qui peut avoir une influence sur l'émission.

La base de données concernant les objets contient des informations sur tous les objets intéressants pouvant être filmés. Dans le cas où ces objets sont mobiles, les données peuvent être actualisées plusieurs fois par seconde en utilisant les données fournies par un et/ou des « système(s) de détermination de position ».

Par « système de détermination de position », on entend n'importe quel système capable de déterminer la position d'une cible en temps réel. Un tel système est illustré dans la demande WO 98/19176 qui décrit un système de suivit de cibles telles que des voitures par des caméras montées sur des robots, ces robots recevant des informations de positionnement de la part d'un ordinateur central. Ce dernier reçoit la position exacte de chaque cible par l'utilisation de détecteurs de positionnement global (GNSS) et envoie les consignes de pointage et d'angle de vue à l'ensemble robot/caméra.

Les documents EP 0 797 177 A et WO 00/28731 A décrivent aussi d'autres procédés de suivi de cibles par des caméras.

Une autre méthode de détermination de position met à contribution les détecteurs de chronométrage placés dans le sol et réagissant au passage des cibles. L'ordinateur calcule la position théorique entre chaque détecteur afin de permettre à l'ensemble caméra/robot de suivre la cible.

Les données concernant chaque objet peuvent inclure, sans toutefois y être limitées:
- la position de l'objet (x,y,z),
- la vitesse de l'objet (vₓ, v_{y}, v_{z}),
- l'accélération de l'objet (aₓ,a_{y},a_{z}),
- l'orientation de l'objet (azimut, pitch, roulis),
- la vitesse de l'orientation de l'objet (dérivées de l'orientation),
- le temps écoulé depuis un temps de départ t₀,
- l'estimation du temps final t_{ω},
- l'ordre d'arrivée actuelle
- le type du véhicule,
- la vitesse du moteur et les réglages de la boîte de vitesse,
- les vibrations,
- l'angle de prise de vue utilisable pour les détails tels que le pilote, le casque du pilote, la publicité latérale ou frontale ... ,
- les obligations contractuelles de visibilité dudit objet (temps, grandeur).

La base de données concernant les objets ne contient pas seulement les informations concernant des objets tels que des voitures de course, mais également les informations concernant les panneaux publicitaires, les tableaux de résultats, et tout autre objet présentant un intérêt à être filmé. Les publicités se trouvant sur une voiture de course, comme par exemple le logo d'un sponsor peuvent également être des objets, c'est-à-dire qu'un objet peut inclure plusieurs sous-objets.

Pour simplifier et accélérer les calculs concernant les objets, ces derniers peuvent avantageusement être considérés comme des sphères, que l'on peut nommer « sphère objet ».

Par « sphère objet » on entend une sphère contenant complètement l'objet. A titre d'exemple, la position de l'objet peut être donnée par le centre de la sphère et la grandeur de l'objet peut être représentée par le diamètre de la sphère. L'avantage de cette représentation est que, comme la projection d'une sphère est indépendante de son orientation (c'est toujours un cercle), l'angle de vue optimal et les angles de visée pour encadrer la cible sont aisément et rapidement calculables.

Le système de l'invention est basé sur l'appréciation selon des critères prédéfinis, de chaque prise de vue faite par les caméramen. L'ordinateur reçoit les données de position de pointage de chaque caméra depuis les capteurs de pointage des caméras et les paramètres mentionnés ci-dessus des objets. L'ordinateur détermine la meilleure prise de vue en fonction des critères stockés dans la base de données. Ainsi, dès que l'objet en tête de la course apparaît dans la ligne droite, l'indice de prise de vue est plus grand que si l'objet est en queue de la course.

Par « indice de prise de vue » on entend une valeur numérique estimée à l'aide de l'ordinateur qui correspond à l'intérêt qu'une prise de vue possède à être diffusée. Plus l'indice de prise de vue est élevé, plus la prise de vue est intéressante. L'indice de prise de vue indique donc l'estimation de l'intérêt qu'a une prise de vue à être diffusée.

L'indice de prise de vue minimum est zéro. Cet indice est obtenu par exemple si un robot ne peut pas voir une cible donnée. Le producteur spécifie les valeurs pour I' « indice de non sélection » et pour I' « indice de sélection automatique ».

Par « indice de non sélection », on entend l'indice de prise de vue minimum que doit obtenir une prise de vue pour qu'elle soit diffusée vers l'extérieur. Lorsqu'une prise de vue voit son indice de prise de vue chuter en dessous de l'indice de non sélection, le système commutera automatiquement pour choisir une autre prise de vue possédant le meilleur indice de prise de vue. L'indice de non sélection est donc l'indice de prise de vue en dessous duquel une prise de vue ne sera plus utilisée pour être diffusée vers l'extérieur.

Par « indice de sélection automatique », on entend un indice de prise de vue pour lequel le système choisit automatiquement la prise de vue devant être diffusée vers l'extérieur. Cet indice est utilisé pour passer outre les instructions du producteur lorsque les événements se déroulent de manière vraiment trop rapide pour des réactions humaines. L'indice de sélection automatique est donc la valeur à partir de laquelle l'indice de prise de vue est si élevé (par exemple un accident important, un vainqueur franchissant la ligne d'arrivée, etc.) que la prise de vue est automatiquement sélectionnée par le système pour être diffusée vers l'extérieur.

Pour des indices de prise de vue situés entre l'indice de non sélection et l'indice de sélection automatique, le producteur pourra voir les prises de vue avec les meilleurs indices possibles sur la parois de moniteurs, ce qui lui permettra de choisir les meilleures prises de vue pour être diffusées vers l'extérieur selon une sélection semi-automatique ou assistée par l'ordinateur.

Selon ce principe, à chaque angle de vue de chaque caméra est attribué un indice de prise de vue. La caméra qui filme une entrée dans les stands par exemple se voit créditer d'un indice de prise de vue élevé. De même, si la caméra pointe sur une zone en dehors de la route, sur la bande d'arrêt d'urgence, c'est qu'il se passe nécessairement quelque chose d'important et l'indice de prise de vue sera très élevé.

Selon un autre aspect de cette détermination d'indice, la présence de plusieurs objets mobiles à faible distance les uns des autres présente un intérêt certain. L'indice de prise de vue sera d'autant majoré que ces objets mobiles sont placés en tête de la course.

Le producteur se verra présenter les meilleures prises de vue que les caméramans sont en train de filmer selon les critères prédéfinis. Il se peut que pour le même événement, plusieurs jeux de critères soient utilisés en produisant autant de sortie vers l'extérieur. En effet, un même événement peut être diffusé vers plusieurs publics différents et il est certain que l'intérêt d'un pays pour sa marque n'est pas le même que pour une marque étrangère. En faisant varier les indices de prise de vue de chaque objet mobile, il est désormais facile de produire plusieurs versions d'un même événement en tenant compte des sensibilités du public visé.

Du fait que l'ordinateur dispose à chaque instant de la liste des objets présents dans les images ainsi que leurs tailles, il est ainsi aisé de réaliser une extraction de l'objet qui nous intéresse pour qu'il occupe toute la surface de l'écran par une fonction zoom électronique. Ceci est particulièrement intéressant lorsque la caméra est pilotée par un cameraman afin de supprimer les défauts dus aux oscillations provoquées par l'opérateur. Cette fonction est également utile lors de rediffusion au ralenti afin de mettre en évidence automatiquement l'objet le plus intéressant, tel qu'un pneu éclaté par exemple.

Selon une autre variante de l'invention, ce système de production d'images assisté par ordinateur met en oeuvre des « robots » remplaçant les caméramans, ces derniers devenant des « opérateurs de robots ».

Par « robot », on entend une caméra motorisée, permettant à un et/ou plusieurs de ses éléments d'être commandé(s) à distance, c'est-à-dire de rendre possible que la caméra soit commandée à l'aide d'un ordinateur. Dans une forme d'exécution préférée, un robot comprend les éléments suivants qui sont commandés à distance: la distance focale, l'angle de vue ainsi que les moteurs de rotations et de translations.

Par « opérateur de robot», on entend une personne travaillant avec un ordinateur et fournissant les commandes et consignes aux « prises de vues » effectuées par un robot. L'opérateur de robot est habituellement situé dans le studio de production. Un opérateur de robot n'a pas besoin d'être assigné à un robot particulier, c'est-à-dire qu'il peut y avoir plus de robots que d'opérateurs de robots.

La base de données concernant les robots disponibles peut contenir à titre d'exemple et de manière non exhaustive:
- la position du robot (x, y, z),
- la vitesse du robot (vₓ, v_{y}, v_{z}), pour les robots mobiles uniquement,
- l'accélération du robot (aₓ,a_{y},a_{z}), pour les robots mobiles uniquement,
- les angles de visée (indiquant la direction) actuels (gauche - droite, en haut - en bas),
- les angles de visée maximum,
- vitesse et accélération maximum des angles de visées,
- angle de vue actuel,
- angle de vue minimal et maximal,
- distance focale actuelle,
- distance focale minimale et maximale.

La base de données concernant le terrain contient des descriptions en trois dimensions de toutes les caractéristiques fixes de la zone devant être prise pour cible et contient:
- la topographie,
- les édifices,
- les tribunes,
- les tours,
- les panneaux publicitaires,
- la transparence de l'air (pluie, pollution, brume, brouillard, fumée, mirage, turbulence).

La base de données des « prises de vue » est générée à l'aide de l'ordinateur en utilisant les autres bases de données citées plus haut.

Dans le cas mettant en oeuvre des robots, le nombre de prise de vues possibles par caméra devient impossible à gérer par le producteur. En effet, une caméra peut filmer en gros plan l'objet A, filmer l'objet B qui s'éloigne ou filmer l'objet C qui approche; ceci n'étant qu'un exemple des nombreuses possibilités de prises de vues.

Dans le cadre de la première variante de l'invention, c'est le caméraman qui, de par son expérience, apprécie ces situations et décide laquelle choisir.

Dans le cadre de la deuxième variante de l'invention, un grand nombre de prises de vues possibles sont évaluées, listées et classées en fonction de l'indice de prise de vue.

Les compétitions sportives sont financées dans une large mesure, par la publicité. Néanmoins, il est très difficile de garantir une visibilité quantifiée pour un sponsor, la vue de sa publicité étant beaucoup sujette au hasard des prises de vue.

Le système de l'invention permet enfin d'apporter une réponse claire à la l'utilisation d'une publicité du fait que le centre de gestion contient des données relatives aux contrats des sponsors. Ainsi, les robots sont dirigés sur un objet publicitaires dont le contrat garantit un temps de diffusion. A chaque prise de vue comportant cet objet, le temps est décompté et lorsque le temps prédéfinit est obtenu, l'indice de prise de vue pour cet objet est réduite provoquant une préférence sur d'autres prises de vue.

Dans ce type de contrat, on défini généralement une durée minimale à chaque apparition pour que cette dernière soit prise en compte.

En fin de prestation, le centre de calcul génère un rapport indiquant le moment précis de diffusion de l'objet, la durée et le degré de visibilité. En effet, il est possible qu'un objet soit vu selon un angle aigu ce qui diminue sa visibilité. Chaque prise de vue d'objet faisant référence à des contrats de sponsors, est qualifiée en fonction de la taille à l'écran, la durée, de l'angle de vue ou d'autres paramètres tel que la vitesse de balayage.

Ce rapport ne tient pas compte seulement de la sélection faite par l'ordinateur, mais des images réellement diffusées. En effet, il se peut que le producteur ne suive pas la sélection de l'ordinateur mais diffuse une autre caméra. Dans ce cas, c'est sur cette image, également analysée par l'ordinateur, que la base de données de diffusion d'objet est établie.

Ainsi, chaque image dispose d'information décrivant les objets compris dans cette image, leurs tailles, leurs positions, leurs intérêts et les données liées au déroulement de la compétition tel que le rang dans la corse, les conditions atmosphériques. Ces informations sont stockées avec les images pour traitement ultérieur. Elles forment ainsi une base de données sur laquelle des requêtes peuvent être exécutées. Une telle requête peut avoir la forme :
- recherche de "voiture A" et "voiture B", lorsque "voiture A" est devant "voiture B", taille "voiture A" au moins de la moitié de l'écran, pendant au moins 4 secondes pendant lesquelles l'objet publicitaire C est visible.

De telles images peuvent être facilement proposées à la vente, par exemple par le biais d'internet, mais peuvent également illustrer un compte rendu de la course en mode différé. Il est à noter que le ralenti est une manière très efficace pour la mise en évidence de publicité ou logos.

Grâce à la connaissance complète de toutes les images présentant de l'intérêt, l'ordinateur peut créer une image composées d'une mosaïque d'images. Ainsi, lorsque l'on file une course automobile, l'ordinateur peut insérer, dans l'image principale montrant un groupe de voiture, une petite image dans un coin de l'image principale montrant le cockpit de la voiture de tête (filmé par une autre caméra), et dans un autre coin ajouter une image prise dans les stands montrant l'angoisse des responsables.

Des images virtuelles peuvent être affichées sur les moniteurs dans certains cas. Les images virtuelles ont plusieurs avantages:
- une prise de vue possible peut être proposée même si le robot associé à cette prise de vue est occupé à filmer une autre prise de vue,
- une prise de vue peut être proposée même si le robot est occupé à effectuer une rotation pour se mettre en position pour filmer cette même prise de vue,
- une prise de vue peut être proposée sans pour autant nécessiter la largeur de bande complète qu'occupe le signal vidéo provenant du robot associé. Ceci est particulièrement important lorsque les robots sont connectés avec le studio de production par radio (avec une largeur de bande limitée) ou lorsque les robots envoient des images en utilisant la même connexion de réseaux (ayant aussi une largeur de bande limitée).

Un autre avantage d'identifier les objets en cours d'acquisition est la possibilité d'ajouter de l'information sur ces objets. Cette adjonction peut être sous la forme de texte en bas de l'image ou d'image en superposition.

Lorsque la prise de vue ne permet pas d'identifier visuellement le concurrent dans l'image, (prise de vue par hélicoptère par exemple), l'ordinateur ajoutera le nom du concurrent dans l'image pour son identification.

En cas de gros plan sur un concurrent, l'ordinateur ajoutera son nom et sa position dans la course. Il est possible d'ajouter la différence de temps avec le concurrent précédent et suivant du fait que l'ordinateur reçoit les indications de position de tous les concurrents.

Cette génération d'image peut permettre l'affichage de la carte avec la trajectoire d'un véhicule ayant subi un accident.

### LISTE DES FIGURES

L'invention sera maintenant illustrée par la description d'une forme de réalisation et à l'aide du dessin dans lequel,
- la figure 1 représente l'état de la technique dans laquelle quatre caméras filment un événement,
- la figure 2 représente une forme d'exécution de l'invention avec quatre robots filmant un événement.

### FIGURES

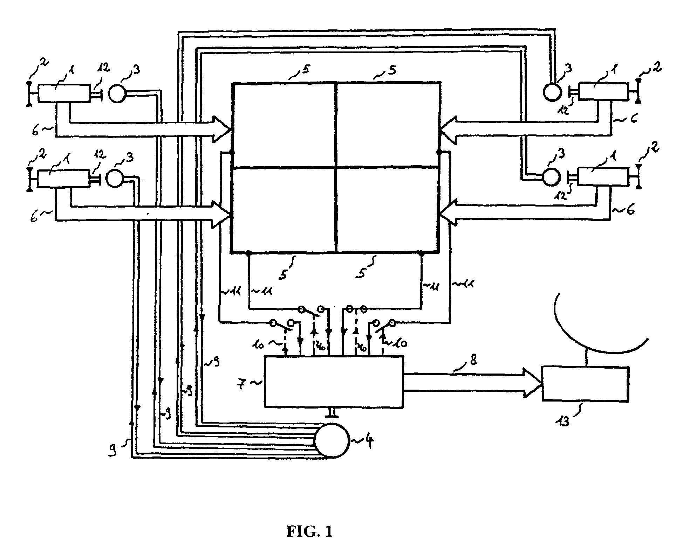

La figure 1 montre un centre de gestion selon l'état de la technique, de sélection et de diffusion vers l'extérieur d'images télévisées qui utilise quatre caméras 1 pour obtenir des prises de vue d'objets non représentés, car bien connus. Quatre cameramen 3 manoeuvrent chacun une caméra 1, lesquelles sont chacune équipées d'une lentille 2 et d'une commande manuelle 12. Les prises de vue 6 effectuées par chaque cameraman 3 sont transmises puis affichées sur les moniteurs 5 formant la parois de moniteurs, chaque moniteur 5 reproduisant l'image filmée par chaque caméra 1. Face à la parois de moniteurs 5, se trouve le producteur 4 relié par communication audio 9 avec les cameramen 3 manoeuvrant les caméra 1. C'est au moyen du système de communication audio 9 que le producteur 4 donne des ordres aux différents cameramen 3 pour leur indiquer quelles cibles ils doivent chacun filmer. Le producteur 4 dispose d'un système de commande 7 équipé de commandes 13 et 10 qui lui permet de choisir parmi les images affichées sur les moniteurs 5, transmises par des câbes 11 vers le système de commande 7, l'image qu'il veut sélectionner pour transmettre ladite image sélectionnée 8 vers le système de diffusion vers l'extérieur 13.

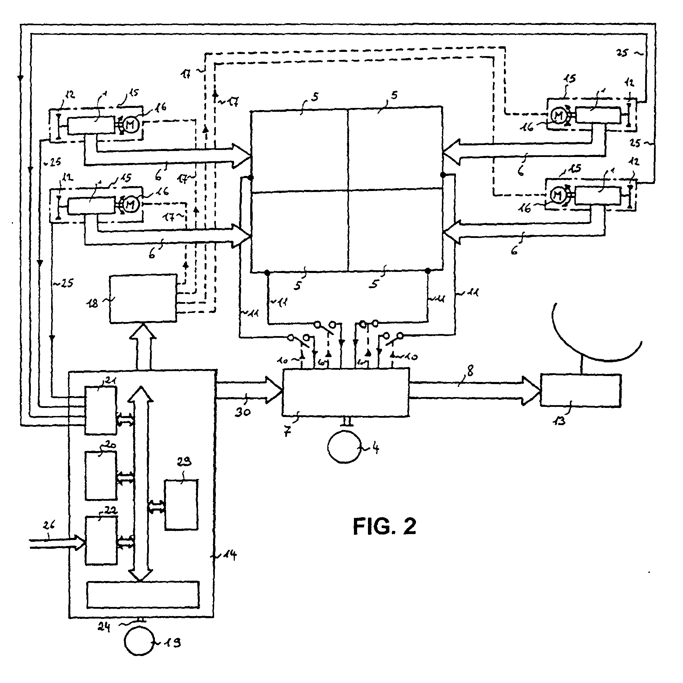

La figure 2 représente le centre de gestion de production selon la deuxième variante de l'invention permettant de produire, sélectionner et diffuser, à l'aide d'un ordinateur 14, les images filmées par quatre robots 15. Chaque robot 15 comprend une caméra 1, équipée d'au moins une lentille 12 et d'au moins un moteur 16 de translation et/ou de rotation. Chaque robot 15 est relié à l'ordinateur 14 par un système de commande 17 et 18 qui permet de commander à distance un et/ou plusieurs éléments du robot 15, comme par exemple un moteur 16 ou la distance focale de la lentille 12.

Dans une première phase, l'opérateur introduit dans la base de données statiques 20 de l'ordinateur 14 des données concernant les objets, des données concernant les robots, des données concernant le terrain, des données concernant la position et caractéristique de chaque robot, des données concernant les prises du vue et des données concernant les conditions contractuelles attachées audits objets.

Lors du déroulement de l'événement à diffuser, les données dynamiques de position des cibles, du rang dans la course, des conditions atmosphériques sont transmises 26 à l'ordinateur 14 dans la base de données dynamique 22.

Cet ordinateur 14 évalue pour chaque caméra, toutes les prises de vue possibles en tenant compte des critères d'évaluation stockés dans les bases de données 21, 20, 22 et 29. De plus, cette évaluation tient compte des prises de vue des autres caméras. Si une caméra pointe sur un objet A selon une prise de vue à indice de prise de vue élevé, une autre caméra capable de pointer sur le même objet A mais dont l'indice de prise de vue est inférieur, va rechercher un autre objet B même si cette prise de vue indique un indice inférieur que celui de l'objet A. Ce système permet un fondu enchaîné ente les différentes caméras, dès qu'une prise de vue voit son indice de prise de vue diminuer, la caméra suivante prend naturellement le relais puisqu'à ce moment, cette caméra bénéficie d'un indice de prise de vue élevé.

Par exemple, la base de données 22 concernant les objets est également alimentée en données 26 par un et/ou des systèmes de détermination de position et/ou des systèmes de mesure, comme par exemple un système GPS (Global Positioning System), non représenté car bien connu.

La base de données concernant les robots 21 est également alimentée en données 25 par les systèmes de mesure et/ou communications qui relient chaque robot 15 à l'ordinateur 14.

Une base de données des cibles 29 est générée à l'aide de l'ordinateur 14 en utilisant les données contenues dans les bases de données 20, 21, 22 et 23. Dans cette base de données des cibles 29 les prises de vue possibles sont stockées, accompagnées chacune de leur indice de prise de vue.

Si la sélection se fait en fonction de l'indice de sélection automatique, l'ordinateur 4 transmet par le système de communication 30 au système de commande 7 l'ordre de sélection automatique de cette prise de vue pour transmettre la prise de vue automatiquement sélectionnée 8 vers le système de diffusion vers l'extérieur 13.

Si l'indice de prise de vue est situé entre l'indice de non sélection et l'indice de sélection automatique, le producteur 4 pourra choisir la meilleure prise de vue 6 sur la parois de moniteurs 5 pour transmettre ladite image sélectionnée 8 vers le système de diffusion vers l'extérieur 13.

## Revendications

1. Système de prises de vue et de sélection d'images comprenant une pluralité de caméras pointant sur des objets évoluant sur un terrain, et dont les images sont envoyées à un centre de gestion, ce centre de gestion comprenant un ordinateur et une base de données (20, 21, 22) comprenant des informations sur les objets pouvant être actualisés par un système de détermination de position desdits objets, comprenant des informations concernant les caméras, comprenant des informations sur le terrain et comprenant des critères prédéfinis d'appréciation des prises de vues, ledit ordinateur étant en charge de sélectionner l'image à diffuser, **caractérisé en ce que** chaque caméra acquiert des prises de vues dont la position dans l'environnement visuel est définie par des capteurs de pointage et d'angle de vue et transmis au centre de gestion, ledit ordinateur établissant un indice de prise de vue pour chaque prise de vue en fonction de la position précise où pointe chaque caméra, la position des objets et des critères prédéfinis d'appréciation des prises de vues, ledit indice de vue étant une valeur numérique correspondant à l'intérêt qu'une prise de vue possède à être diffusée, le centre de gestion comprenant des moyens pour sélectionner la prise de vue ayant l'indice le plus élevé.

2. Système de prise de vue et de sélection d'image selon la revendication 1, **caractérisé en ce que** les caméras sont montées sur des robots, **en ce que** le centre de gestion comprend des moyens pour piloter les robots en fonction des données de comportement des objets.

3. Système de prise de vue et de sélection d'image selon la revendication 2, **caractérisé en ce que** le centre de gestion comprend des moyens pour évaluer les prises de vue possibles de chaque ensemble caméra/robot en fonction des indices de prise de vue et comprend des moyens pour piloter les robots afin d'obtenir l'image ayant l'indice le plus élevé.

4. Système de prise de vue et de sélection d'image selon la revendication 3, **caractérisé en ce que** le centre de gestion comprend des moyens pour réunir logiquement plusieurs objets en un nouvel objet lorsque les distances entre ses objets sont faibles, et **en ce que** l'indice de prise de vue de ce nouvel objet est majoré par rapport aux indices des objets pris séparément.

5. Système de prise de vue et de sélection d'image selon les revendications 1 à 4, **caractérisé en ce que** le centre de gestion comprend plusieurs base de données comprenant plusieurs jeux de paramètres d'évaluation des prises de vue, ce centre de gestion disposant de plusieurs sortie de diffusion selon les indices de prises de vue répondant aux critères desdits paramètres d'évaluation.

6. Système de prise de vue et de sélection d'image selon les revendications 1 à 4, **caractérisé en ce qu'**il comprend des moyens pour déterminer les objets réellement diffusés, le centre de gestion stockant un historique de diffusion desdits objets.

7. Système de prise de vue et de sélection d'image selon la revendication 6, **caractérisé en ce que** des paramètres de qualité de diffusion d'objet sont ajoutés à l'historique et comprennent le durée de diffusion, la taille et l'angle de vue de l'objet.

8. Système de prise de vue et de sélection d'image selon les revendications 6 et 7, **caractérisé en ce que** le centre de gestion contient des données spécifiant la quantité de diffusion desdits objets et que le centre de gestion abaisse l'indice de prise de vue desdits objets une fois que la quantité de diffusion est atteinte.

9. Système de prise de vue et de sélection d'image selon les revendications 6 et 7, **caractérisé en ce que** le centre de gestion stocke les prises de vue accompagné par un descriptif des objets contenus dans ces prises de vues, les conditions dynamiques de la compétition.

10. Système de prise de vue et de sélection d'image selon les revendications 1 à 9, **caractérisé en ce que** le centre de gestion insère des informations dans les prises de vues sur l'identification des objets en cours d'acquisition.

11. Système de prise de vue et de sélection d'image selon la revendication 10, **caractérisé en ce que** ces informations comprennent le nom lié à l'objet, sa position dans la compétition, les écarts avec ses principaux concurrents.

## Claims

1. Image acquisition and selection system comprising a plurality of cameras pointing at objects moving on a terrain with the resulting images being sent to a control centre, said control centre comprising a computer and a database (20, 21, 22) comprising information about the objects able to be updated by a system to determine the object's position, comprising information about the cameras, comprising information about the terrain and comprising predefined criteria to weight the acquired images, said computer being in charge of selecting the image to broadcast, **characterized in that**, each camera acquires images which can be accurately positioned in relation to the visual environment by means of pointing and field of view captors and transmitted to the control centre, said computer calculating an image rating for each acquired image as a function of the precise position where the camera is pointing, the position of the objects and image selection criteria, said image rating being a numerical value corresponding to the interest to broadcast an image, the control centre comprising means to select the image having the highest image rating.

2. Image acquisition and selection system according to claim 1, **characterised by** the fact that the cameras are mounted on robots, the control centre includes means to control the robots as a function of the objects' behaviour.

3. Image acquisition and selection system according to claim 2, **characterized in that** the control centre includes means to evaluate the potential images for each camera/robot unit as a function of the image ratings and means to direct any such robot to acquire the potential image with the highest image rating.

4. Image acquisition and selection system according to claim 3, **characterized in that**, the control centre comprises means to make a suitable composition of several objects into a new object when the distances between the objects are small and **in that**, the image rating of this new object is higher than the image rating of any of the objects taken separately.

5. Image acquisition and selection system according to claims 1 to 4, **characterized in that** the control centre comprises several databases with several sets of parameters for evaluating images, the control centre having a plurality of broadcast output according to the image indexes according to the criteria of said evaluation parameters.

6. Image acquisition and selection system according to claims 1 to 4, in which the control centre comprises means to determine and keep a historical log of the objects contained in the images that were selected for broadcast.

7. Image acquisition and selection system according to claim 6, in which the quality parameters of the object are added to the historical log and includes the time of broadcast, the size and the field of view of the object.

8. Image acquisition and selection system according to claims 6 and 7, in which the control centre comprises data on the amount of time an object has appeared in the broadcast and the control centre reduces the image rating for such objects once the required amount of airing has been reached.

9. Image acquisition and selection system according to claims 6 and 7, in which the control centre stores the images in conjunction with a description of the objects in the image and the dynamic parameters of the competition.

10. Image acquisition and selection system according to claims 1 to 9, in which the control centre inserts object identification information in the images.

11. Image acquisition and selection system according to claim 10, in which the information comprises the name of the object, its position in the competition, its gap in relation to its main competitors.

## Patentansprüche

1. System zur Aufnahme und Auswahl von Bildern mit eine Vielzahl von Fernsehkameras, die auf Gegenstände gerichtet sind, die sich auf einem Gelände bewegen, und deren Bilder an ein Verwaltungszentrum geschickt werden, das über einen Computer und eine Datenbank (20, 21, 22) mit Informationen über die Gegenstände verfügt, die durch ein Positionsermittlungssystem der genannten Gegenstände aktualisiert werden können, mit Informationen, die die Fernsehkameras betreffen, mit Informationen über das Gelände und mit vorherbestimmte Bewertungskriterien für die Aufnahmen, wobei der Computer die Aufgabe hat, das zu sendende Bild auszuwählen,
**gekennzeichnet dadurch dass** jede Kamera Aufnahmen macht, deren Position in der visuellen Umgebung durch Ausrichtungs- und Blickwinkel-Aufnehmer definiert und ans Verwaltungszentrum gesendet wird, wobei der Computer einen Aufnahmeindex für jede Aufnahme festlegt, je nach der genauen Position, wohin jede Kamera gerichtet ist, der Position der Gegenstände und vorherbestimmten Bewertungskriterien der Aufnahmen, wobei der Aufnahmeindex ein digitaler Wert ist, der dem Interesse entspricht, das eine Aufnahme hat, gesendet zu werden, wobei das Verwaltungszentrum Mittel besitzt, um die Aufnahme mit dem höchsten Index auszuwählen.

2. System zur Aufnahme und Auswahl von Bildern nach Anspruch 1, **gekennzeichnet dadurch, dass** die Fernsehkameras auf Roboter montiert sind, sowie **dadurch**, dass das Verwaltungszentrum Mittel umfasst, um die Roboter je nach den Verhaltensdaten der Gegenstände anzusteuern.

3. System zur Aufnahme und Auswahl von Bildern nach Anspruch 2, **gekennzeichnet dadurch, dass** das Verwaltungszentrum Mittel umfasst, um die möglichen Aufnahmen jeder Kamera-Roboter-Einheit je nach den Aufnahmeindizes auszuwerten, und Mittel umfasst, um die Roboter anzusteuern, um das Bild mit dem höchsten Index zu erhalten.

4. System zur Aufnahme und Auswahl von Bildern nach Anspruch 3, **gekennzeichnet dadurch, dass** das Verwaltungszentrum Mittel umfasst, um mehrere Objekte logisch zu einem neuen Objekt zu vereinigen, wenn die Entfernungen zwischen seinen Objekten gering sind, sowie **dadurch**, dass der Aufnahmeindex dieses neuen Objekts höher als die Indizes der getrennt gesehenen Objekte ist.

5. System zur Aufnahme und Auswahl von Bildern nach den Ansprüchen 1 bis 4, **gekennzeichnet dadurch, dass** das Verwaltungszentrum mehrere Datenbanken mit mehreren Sätzen von Bewertungsparametern für die Aufnahmen umfasst, wobei das Verwaltungszentrum über mehrere Sendeausgänge verfügt, je nach den Aufnahmeindizes, die die Kriterien der genannten Bewertungsparameter erfüllen.

6. System zur Aufnahme und Auswahl von Bildern nach den Ansprüchen 1 bis 4, **gekennzeichnet dadurch, dass** es Mittel umfasst, um die tatsächlich ausgestrahlten Objekte zu bestimmen, wobei das Verwaltungszentrum einen Ausstrahlungsverlauf für die genannten Objekte speichert.

7. System zur Aufnahme und Auswahl von Bildern nach Anspruch 6, **gekennzeichnet dadurch, dass** Sendequalitätsparameter für das Objekt zum Verlauf hinzugefügt werden, die die Sendedauer umfassen, die Größe und den Blickwinkel des Objekts.

8. System zur Aufnahme und Auswahl von Bildern nach den Ansprüchen 6 und 7, **gekennzeichnet dadurch, dass** das Verwaltungszentrum Daten enthält, die die Ausstrahlungsmenge der genannten Objekte spezifizieren, und dass das Verwaltungszentrum den Aufnahmeindex der genannten Objekte reduziert, wenn die Ausstrahlungsmenge erreicht ist.

9. System zur Aufnahme und Auswahl von Bildern nach den Ansprüchen 6 und 7, **gekennzeichnet dadurch, dass** das Verwaltungszentrum die Aufnahmen speichert, mit einer Beschreibung der in diesen Aufnahmen enthaltenen Objekte, den dynamischen Bedingungen des Wettbewerbs.

10. System zur Aufnahme und Auswahl von Bildern nach den Ansprüchen 1 bis 9, **gekennzeichnet dadurch, dass** das Verwaltungszentrum zur Identifizierung der gerade erfassten Objekte Informationen in die Aufnahmen einfügt.

11. System zur Aufnahme und Auswahl von Bildern nach Anspruch 10, **gekennzeichnet dadurch, dass** diese Informationen den Namen des Objekts umfassen, seine Position in dem Wettbewerb und die Abstände zu seinen wichtigsten Konkurrenten.
